Europäisches Patentamt

European Patent Office

Office européen des brevets

(11) Veröffentlichungsnummer: **0 314 171 B1**

## EUROPÄISCHE PATENTSCHRIFT

(45) Veröffentlichungstag der Patentschrift: **12.01.94**

(51) Int. Cl.5: **H01S 3/098**, H01S 3/108

(21) Anmeldenummer: **88118010.3**

(22) Anmeldetag: **28.10.88**

(54) **Modengekoppelter Laser.**

(30) Priorität: **30.10.87 DE 3736881**
**05.08.88 DE 3826716**

(43) Veröffentlichungstag der Anmeldung:
**03.05.89 Patentblatt 89/18**

(45) Bekanntmachung des Hinweises auf die
Patenterteilung:
**12.01.94 Patentblatt 94/02**

(84) Benannte Vertragsstaaten:
**DE FR GB NL**

(56) Entgegenhaltungen:

**OPTICS COMMUNICATIONS, Band 60, Nr. 1,2, 15. Oktober 1986, Seiten 99-103, Elsevier Science Publishers B.V. (North-Holland Physics Publishing Division); F. OUELLETTE et al.: "Pulse shaping and passive mode-locking with a nonlinear Michelson interferometer"**

**IEEE JOURNAL OF OUANTUM ELECTRONICS, Band OE-13, Nr. 11, November 1977, Seiten 915-924; K. SALA et al.: "Passive mode locking of lasers with the optical Kerr effect modulator"**

(73) Patentinhaber: **Max-Planck-Gesellschaft zur Förderung der Wissenschaften e.V.
Bunsenstrasse 10
D-37073 Göttingen(DE)**

(72) Erfinder: **Krassimir, Stankov, Dr. Dipl.-Phys.
Rieswartenweg 4
D-3400 Göttingen-Nikolausberg(DE)**
Erfinder: **Fritz, Schäfer, Prof. Dr. Dipl.-Phys.
Senderstrasse 53
D-3400 Göttingen-Nikolausberg(DE)**

(74) Vertreter: **von Bezold, Dieter, Dr. et al
Dr. Dieter von Bezold
Dipl.-Ing. Peter Schütz
Dipl.-Ing. Wolfgang Heusler
Brienner Strasse 52
D-80333 München (DE)**

EP 0 314 171 B1

## Beschreibung

Die Erfindung betrifft einen modengekoppelten Laser.

Die passive Modenkopplung ist ein bekanntes Verfahren, um mit Lasern ultrakurze Impulse (d.h. Impulse mit weniger als 100 ps Halbwertsbreite) zu erzeugen. Es ist bekannt zur passiven Modenkopplung eine dünne Küvette mit einer Farbstofflösung, die die Laserwellenlänge absorbiert, dicht vor einem Resonatorspiegel im Resonator des Lasers anzuordnen. Da die Transmission einer solchen Farbstofflösung bei geeignet ausgewählten Farbstoffen von der einfallenden Lichtintensität abhängt, weil höhere Lichtintensitäten mehr Farbstoffmoleküle in einen angeregten Zustand versetzen, in welchem sie das Laserlicht nicht oder nur noch geringfügig absorbieren können, also ausbleichen, wird beim Anschwingen des Lasers, wenn noch starke Schwankungen (Photonenrauschen) vorhanden sind, jeweils nur die stärkste Rauschspitze durch die Farbstofflösung relativ wenig geschwächt durchgelassen, während die schwächeren Rauschspitzen stark unterdrückt werden. Es bildet sich so ein im Resonator hin- und herlaufender, immer steiler und kürzer werdender Impuls aus, von dem bei jedem Auftreffen auf den Auskoppelspiegel ein gewisser Bruchteil ausgekoppelt wird, so daß auf diese Art und Weise am Ausgang des Lasers ein Zug von ultrakurzen Impulsen austritt.

Die Nachteile dieses Verfahrens bestehen vor allen Dingen in der geringen photochemischen Beständigkeit der Farbstofflösung sowie in der kritischen Einstellung der Farbstoffkonzentration, sowie der Position und der Dicke der Farbstoffküvette. Die oftmals benötigte Emission bei der halben Wellenlänge kann in diesem Fall nur durch externe Frequenzverdopplung in einem Frequenzverdopplerkristall erzeugt werden und nicht durch die im allgemeinen besonders effiziente Verdopplung innerhalb des Resonators, da die Farbstofflösungen bei der halben Laserweltenlänge häufig starke Absorption zeigen, die zu hohen Verlusten führt.

Für manche Anwendungen benötigt man außerdem zwei verschiedene Typen von Lasern, die zeitlich genau synchronisierte Züge aus ultrakurzen Laserstrahlungsimpulsen liefern. Dies konnte bisher nur mit erheblichem Aufwand erreicht werden. Bei einem bekannten Verfahren zur Synchronisation zweier Laser wird ein modengekoppelter Hauptoszillator verwendet, der entweder direkt oder mit seiner zweiten Harmonischen einen anderen Laser (normalerweise einen Farbstofflaser) synchron pumpt. Nachteilig hieran ist, daß der Hauptoszillator selbst modengekoppelt werden muß und daß die Anzahl der Kombinationen verschiedener Laser, die auf diese Weise synchronisiert werden können, begrenzt ist.

Bei einem anderen bekannten Synchronisations-Verfahren wird in einem Farbstofflaser ein laserfähiger Absorberfarbstoff verwendet, sodaß eine Modenkopplung der beiden lasernden Medien eintritt (Z. A. Yasa et al, Appl. Phys. Lett. **30**, No. 1, 1977, 24-26; siehe auch W. Dietel et al, OPTICS COMMUNICATIONS, **35**, Nr. 3, Dez. 1980, 445, 446). Der Nachteil dieses Verfahrens besteht darin, daß die Pumplaserwellenlänge an die Absorption des Laserfarbstoffes angepaßt werden muß, wodurch wieder die Anzahl der möglichen Kombinationen beschränkt wird. Es ist auch oft erwünscht, ultrakurze Impulse mit verschiedenen Wellenlängen zu erzeugen, z. B. mit der Summen- oder Differenzfrequenz der Strahlung von zwei modengekoppelten Lasern. Hierzu hat man bisher im allgemeinen ein zusätzliches nichtlineares Medium verwendet.

Aus einer Veröffentlichung von Sala et al, IEEE Journal of Quantum Electronics, Vol. QE-13, Nr. 11, November 1977, S. 915-924 und einer Veröffentlichung von Quellette et al in OPTICS COMMUNICATIONS, Vol. 60, Nr. 1, 2, 15, Oktober 1986, S. 99-103 ist es bekannt, die intensitätsabhängige Phasenverschiebung in einem optischen Kerreffekt-Modulator bzw. nichtlinearen Michelson-Interferometer zur passiven Modenkopplung eines Lasers auszunutzen.

Der vorliegenden Erfindung liegt die Aufgabe zugrunde, eine verbesserte Einrichtung zur Modenkopplung für einen modegekoppelten Laser anzugeben, der ein aktives Medium zum Erzeugen einer grundfrequenten Strahlung, ferner einen optischen Resonator, der durch einen ersten Spiegel sowie einen zweiten Spiegel begrenzt ist und das aktive Medium enthält, und eine zwischen dem aktiven Medium und dem zweiten Spiegel angeordneten, zur passiven Modenkopplung dienende nichtlineare optische Einrichtung, welche eine bevorzugte Verstärkung von Strahlung höherer Intensität gegenüber Strahlung niedrigerer Intensität bewirkt, enthält.

Gemäß der Erfindung ist die nichtlineare optische Einrichtung eine reversibel arbeitende frequenzumsetzende Einrichtung, welche bei Beaufschlagung mit der grundfrequenten Strahlung Strahlung einer ersten Frequenz, die die Grundfrequenz sein kann, und Strahlung einer zweiten Frequenz liefert und umgekehrt, wobei mit zunehmender Intensität der Anteil der Strahlung der zweiten Frequenz wächst, und der zweite Spiegel hat bei der Grundfrequenz ein niedrigeres Reflexionsvermögen als bei der zweiten Frequenz.

Gemäß einem zweiten Aspekt der vorliegenden Erfindung ist die nichtlineare optische Einrichtung ebenfalls eine reversibel arbeitende frequenzumsetzende Einrichtung und es sind eine Einrichtung zum Einkoppeln von Laserstrahlung einer weiteren Frequenz in die nichtlineare Einrichtung sowie eine Reflektoranordnung, welche im Wege von Strahlung, die aus der nichtlinearen Einrichtung austritt, angeordnet und für die grundfrequente Strahlung und für die Strahlung der weiteren Frequenz ein niedrigeres Reflexionsvermögen hat als für die Strahlung einer zweiten Frequenz, die durch Wechselwirkung der beiden Laserstrahlungen in der nichtlinearen Einrichtung entsteht, vorgesehen.

Bei den erfindungsgemäßen modengekoppelten Lasern bewirkt also die nichtlineare optische Einrichtung in Kombination mit dem zweiten Spiegel bzw. der Reflektoranordnung eine bevorzugte Reflexion von Strahlung höherer Intensität im Vergleich mit Strahlung niedrigerer Intensität, so daß mit zunehmender Intensität der Anteil der Strahlung der zweiten Frequenz wächst.

Die nichtlineare optische Einrichtung kann ein frequenzverdoppelndes optisches Element oder ein parametrisches optisches Element enthalten. Im ersten Falle ist die erste Frequenz die Grundfrequenz fo des Lasers und die zweite Frequenz ist 2fo. Im zweiten Falle werden zwei Frequenzen f1, f2 erzeugt, die niedriger als fo sind.

Die bei dem vorliegenden Laser verwendete Einrichtung zur Modenkopplung zeichnet sich durch eine sehr gute Beständigkeit aus, ist einfach anwendbar, hat eine kurze Ansprechzeit und erlaubt außerdem eine Frequenzvervielfachung oder allgemeiner eine Frequenzumsetzung innerhalb des Resonators des Lasers.

Die erfindungsgemäße Einrichtung ermöglicht eine wesentlich stabilere Erzeugung ultrakurzer Impulse durch passive Modenkopplung eines Lasers als dies bisher der Fall war. Die bekannten nichtlinearen optischen Kristalle haben im allgemeinen eine sehr hohe Zerstörungsschwelle im Vergleich zu einer Küvette mit Farbstofflösung und sind in ihren Eigenschaften zeitlich konstant im Gegensatz zu Farbstofflösungen. Ferner ist die vorliegende Einrichtung leicht aufzubauen und einzujustieren und benötigt keine zusätzlichen Hilfseinrichtungen, wie eine Umwälzpumpe, die bei einer Küvette mit Farbstofflösung nötig ist, um Schlieren in der Lösung zu vermeiden und eine etwas größere Langzeitkonstante der Absorption zu erreichen. Ferner ergibt sich im Gegensatz zu den endlichen Relaxationszeiten der Farbstoffe in einer Lösung nach dem herkömmlichen Verfahren im erfindungsgemäßen Verfahren eine unmeßbar kurze Ansprechzeit durch rein elektronische Vorgänge, so daß im Gegensatz zum herkömmlichen Verfahren die Kürze der erzielbaren Impulse nur noch vom aktiven Medium abhängt.

Mit der Modenkopplüngseinrichtüng des vorliegenden Lasers läßt sich auf einfache Weise eine Modenkopplung und Synchronisation zweier Laser erreichen. Dieser Aspekt ist ganz universell anwendbar und praktisch keinen Beschränkungen hinsichtlich der Wellenlängenbereiche der synchronisierten Laser unterworfen. Es stehen außerdem Impulszüge mit der Summen- oder Differenzfrequenz der beiden Laserfrequenzen zur Verfügung, wodurch sich noch weitere Anwendungsmöglichkeiten für die Erfindung ergeben.

Im folgenden werden Ausführungsbeispiele der Erfindung anhand der Zeichnung erläutert. Es zeigen:

Fig. 1    eine schematisierte Darstellung des Aufbaus eines modengekoppelten Lasers gemäß einem bevorzugten Ausführungsbeispiel der vorliegenden Erfindung,

Fig. 2    ein Diagramm zur Erläuterung der vorliegenden Erfindung,

Fig. 3    ein Oszillogramm, das den Zeitverlauf eines mit einem Laser nach Fig. 1 erzeugten Laserimpulszuges wiedergibt,

Fig. 4    eine schematische Darstellung zweier synchron modengekoppelter Laser mit einer kombinierten Laserresonatoranordnung;

Fig. 5    eine schematische Darstellung einer Einrichtung zum synchronen Modenkoppeln eines Lasers mit einem Impulszug von einem anderen modengekoppelten Laser;

Fig. 6 und 7    Diagramme zur Erläuterung der Arbeitsweise der Laser gemäß Fig. 4 und 5.

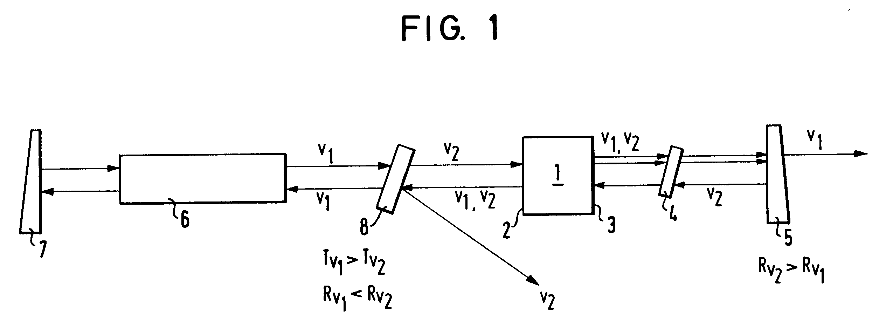

Der Laser gemäß Fig. 1 enthält einen Laserresonator mit einem ersten Resonatorspiegel (7) und einem zweiten Resonatorspiegel (5), ein aktives Medium (6), ein frequenzverdoppelndes Element, wie einen Frequenzverdopplerkristall (1) mit antireflexbelegten Eintritts- und Austrittsflächen (2) und (3), eine drehbar angeordnete planparallele Glasplatte (4) und einen dichroitischen Spiegel (8), der eine relativ hohe Transmission für die Grundwellenlänge der vom Lasermedium (6) emittierten Strahlung aufweist und eine maximale Reflexion für die Wellenlänge der frequenzverdoppelten Strahlung. Der Resonator-Spiegel (7) hat eine maximale Reflexion bei der Grundwellenlänge, dagegen hat der Resonator-Spiegel (5) für die frequenzverdoppelte Strahlung eine maximale Reflexion und für die Strahlung der Grundwellenlänge eine kleinere Reflexion R als für die frequenzverdoppelte Strahlung, z. B. R = 0,05 bis R = 0,3 und darüber.

Wird das aktive Medium (6) über die Schwelle der Laseroszillation gepumpt, so wird im Frequenzverdopplerkristall (1) ein Teil der grundfrequenten Laserstrahlung in frequenzverdoppelte Strahlung umgesetzt. Der Umwandlungsgrad $\eta$ wächst bekanntlich proportional zur Laserstrahlungsintensität an. Hat die vom Spiegel (5) reflektierte frequenzverdoppelte Strahlung beim Wiedereintritt in den Frequenzverdopplerkristall die richtige Phasenlage, so wird sie zum größten Teil wieder in die Grundfrequenz zurückverwandelt. Durch die unterschiedliche Dispersion in Luft und Glas für die beiden Wellenlängen läßt sich dies immer erreichen, beispielsweise indem man die Glasplatte (4) $\mu$m einen kleinen Winkel dreht, um eine etwas veränderte optische Weglänge zu erreichen, bei der diese Bedingungen erfüllt sind, oder indem man den Spiegel (5) längs der optischen Achse bewegt oder aber auch den Luftdruck im Resonator entsprechend ändert. Der Gesamteffekt ist der, daß sich durch die Kombination aus dem Spiegel (5) und dem Frequenzverdopplerkristall tatsächlich für die Grundfrequenz eine effektiv höhere Reflektivität ergibt als ohne Frequenzverdoppler oder bei falsch eingestellter Phasenanpassung zwischen Grundfrequenz und Oberwelle.

Eine genauere theoretische Betrachtung zeigt, daß die effektive Reflektivität, die durch dieses nichtlineare Verhalten des Frequenzverdopplerkristalls hervorgerufen wird und hier mit $R_{n1}$ bezeichnet werden soll, gegeben ist durch

$$R_{n1} = [\eta R_2 + (1-\eta)R_1]\{1-\tanh^2\{[\eta R_2 + (1-\eta)R_1]^{-\frac{1}{2}}\cdot\text{artanh}\sqrt{\eta}-\text{artanh}\{(\eta R_2)^{\frac{1}{2}}/[\eta R_2 + (1-\eta)R_1]^{\frac{1}{2}}\}\}\}. \qquad (1)$$

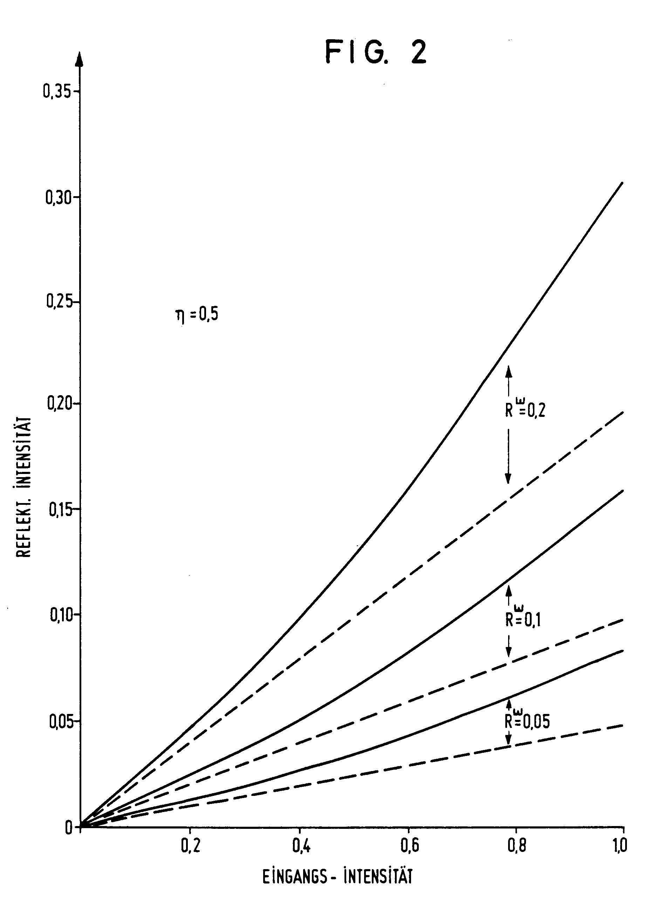

Dabei ist $R_1$ der (lineare) Reflexionskoeffizient des Spiegels (5) für die Grundwelle und $R_2$ der (lineare) Reflexionskoeffizient des Spiegels (5) für die frequenverdoppelte Welle. Für den Fall $\eta$ = 0,5, d.h. also für einen Wirkungsgrad von 50% bei der Umwandlung der Grundfrequenz in die Oberwelle, zeigt Fig. 2 eine Kurvenschar, die die Intensität der reflektierten Strahlung von der Kombination Frequenzverdopplerkristall (1), Glasplatte (4) und Spiegel (5) als Funktion der normierten Eingangsintensität mit $R_1$ als Parameter darstellt, wobei die durchgezogenen Linien jeweils für die nichtlineare Reflexion $R_{n1}$ und die gestrichelten Linien für die lineare Reflexion $R_1$ ohne Frequenzverdopplerkristall gelten. Eine genauere theoretische Erläuterung folgt.

Da auch bei der erfindungsgemäßen Laseranordnung die Rauschspitzen höherer Intensität zu einer höheren Reflexion und damit zu einer größeren Rundumverstärkung führen, wird sich, ähnlich wie bei der bekannten Einrichtung zur passiven Modenkopplung wiederum ein einzelner ultrakurzer Impuls herausbilden, der im Resonator umläuft. Entsprechend wird nicht nur bei der Gründwellenlänge, sondern auch bei der Oberwelle ein ultrakurzer Impuls entstehen, der allerdings zum größten Teil wieder in der eben geschilderten Art und Weise durch den Frequenzverdopplerkristall in die Grundwelle zurücktransformiert wird. Jedoch kann der Rest des nicht zurückgewandelten frequenzverdoppelten Lichts durch den dichroitischen Spiegel (8) als kurzer Impuls bei der halben Wellenlänge der Grundwelle ausgekoppelt werden.

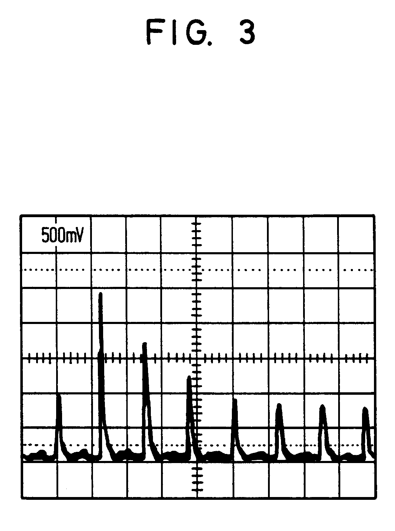

Fig. 3 ist ein Oszillogramm, das den Zeitverlauf eines Laserimpulszuges, der in einer Anordnung gemäß Fig. 1 erzeugt wurde, wiedergibt. Da dieses Oszillogramm mit einer Photodioden-Oszillographen-Kombination mit einer Anstiegszeit von 350 ps aufgenommen wurde, ist die wahre Impulsbreite nicht zu erkennen. Durch ein nichtlineares optisches Verfahren wurde jedoch festgestellt, daß diese unter 100 ps liegt. Die erzielbare Halbwertsbreite wird nach unten hin nur durch das nichtlineare optische Medium (6) begrenzt, nicht aber durch die Anordnung aus dem nichtlinearen optischen Kristall, der Glasplatte und dem Spiegel, da die Ansprechzeit des nichtlinearen optischen Kristalls durch rein elektronische Vorgänge bestimmt wird und daher praktisch unmeßbar kurz ist.

Das Ausführungsbeispiel nach Fig. 1 zeigt den besonders einfachen Fall der Verwendung eines Frequenzverdopplerkristalls, im Prinzip kann bei der vorliegenden Erfindung statt eines Frequenzverdopplerkristalls jedoch auch eine andere nichtlineare optische Einrichtung, die reversibel die Grundfrequenz in eine oder mehrere andere Wellenlängen umsetzt, verwendet werden. Man kann also als nichtlineare optische Einrichtungen auch Anordnungen mit zwei Kristallen benutzen, durch die sich insgesamt eine Frequenzverdreifachung nach bekanntem Verfahren erreichen läßt, oder auch parametrische optische Kristalle, die die Grundfrequenz in zwei niedrigere Frequenzen aufspalten, deren Summe wieder gleich der Grundfrequenz ist. Da solche Abwandlungen für den Fachmann aus dem oben erläuterten Beispiel mit dem Frequenzverdopplerkristall leicht ableitbar sind, kann auf Einzelheiten verzichtet werden. Ebenso lassen sich noch weitere Varianten angeben, die für den Fachmann bei Bedarf leicht realisierbar sind, beispielsweise kann der dichroitische Spiegel (8) weggelassen werden und die Auskopplung der durch das nichtlineare Medium (6) hindurchgetretenen frequenzverdoppelten Strahlung kann durch den Spiegel (7) erfolgen, der dann für die frequenzverdoppelte Strahlung vorzugsweise maximale Transmission hat. Dies ist allerdings nur dann sinnvoll, wenn das aktive Medium (6) keine nennenswerte Absorption für die frequenzverdoppelte Welle aufweist, wie es beispielsweise im Falle von Nd-YAG der Fall ist. Es wurde auch schon erwähnt, daß die Glasplatte (4) zur Phasenanpassung wegfallen kann, (obgleich sie ein besonders bequemes Mittel zur Erzielung der Phasenanpassung durch einfache Rotation der Glasplatte darstellt,) wenn die Dispersion der Luft zwischen dem nichtlinearen optischen Kristall (1) und dem Spiegel (5), zwischen denen dann der richtige Abstand eingestellt werden muß, ausgenutzt wird. Ebenso wurde auch erwähnt, daß statt der Änderung der Spiegelstellung eine Änderung des Druckes der Luft vorgenommen werden kann, was besonders dann zweckmäßig ist, wenn die ganze Anordnung sowieso schon, z. B. aus Gründen des Staubschutzes, in ein Druckgefäß eingebaut ist.

Bei einer Weiterbildung des vorliegenden Verfahrens wird gleichzeitig eine Güteschaltung im Resonator nach bekannten Verfahren vorgenommen, z. B. mittels einer Pockelszelle. Schließlich kann das vorliegende Verfahren genauso wie das bekannte Verfahren zur passiven Modenkopplung sehr gut in Verbindung mit einem aktiven Verfahren zur Modenkopplung eingesetzt werden, beispielsweise mittels eines akustooptischen Modenkopplers. Dadurch wird bekanntlich eine besonders hohe Amplitudenstabilität erreicht.

Geeignete Materialien für die nichtlineare optische Einrichtung sind Kristalle aus KDP, KTP, KDDP, Lithiumniobat u. a. m.

Bei einer bevorzugten Ausführungsform der Erfindung hat der Resonator eine Länge von etwa 1 Meter, die ziemlich unkritisch ist, das aktive Lasermedium ist Nd-YAG und die nichtlineare optische Einrichtung ist ein Frequenzverdopplungskristall aus KTP. Das Reflexionsvermögen des einen Resonatorspiegels (5) beträgt bei der Grundwellenlänge 1060 nm der Nd-YAG-Strahlung etwa 30% und bei der frequenzverdoppelten Nd-YAG-Strahlung (530nm) im wesentlichen 100%.

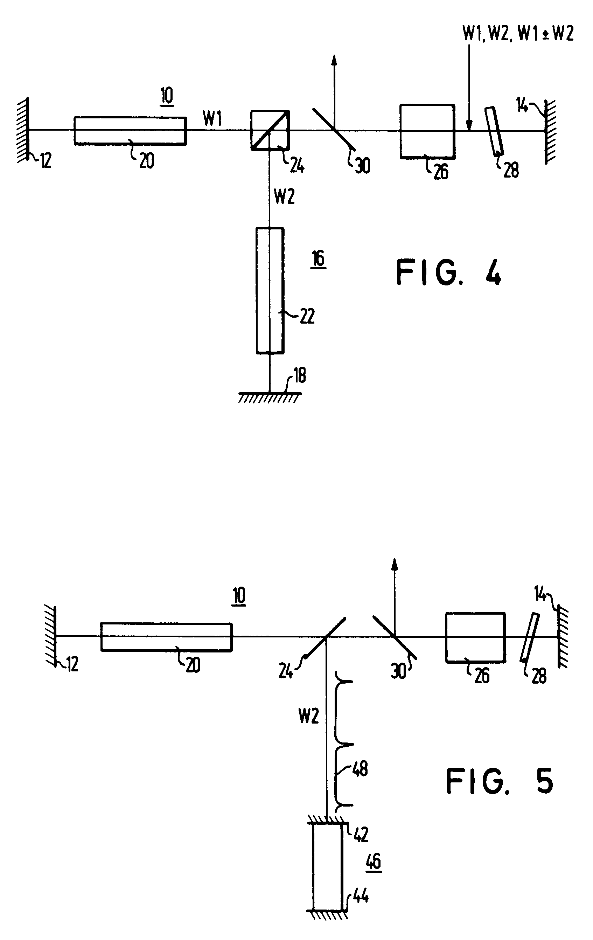

Die in Fig. 4 dargestellte Laseranordnung enthält einen ersten optischen Resonanzhohlraum oder Laserresonator (10), der durch einen ersten Spiegel (12) und einen zweiten Spiegel (14) begrenzt ist, ferner einen zweiten Laserresonator (16), der durch einen dritten Spiegel (18) und den zweiten Spiegel (14) begrenzt ist. Im ersten Resonator 10) ist ein erstes aktives Lasermedium (20) angeordnet, im zweiten Laserresonator ein zweites aktives Lasermedium (22). Die Anordnung enthält ferner eine Strahlvereinigungsvorrichtung (24), z. B. eine Polarisatoranordnung oder einen dichroischen Spiegel, die vom Strahlengang zwischen den Spiegeln (12) und (14) gerade durchsetzt wird, während sie den Strahlengang zwischen den Spiegeln (14) und (18) um 90° umlenkt. Im gemeinsamen Teil der Strahlengänge zwischen der Einrichtung (24) und dem gemeinsamen zweiten Spiegel (14) sind ein nichtlineares optisches Medium (26), eine drehbar gelagerte planparallele Glasplatte (28), die zur Phaseneinstellung dient, und ein selektiv reflektierender Auskopplungsspiegel (30) angeordnet.

Das nichtlineare Medium (26) kann ein Frequenzmischungskristall sein, z. B. aus KDP, KTP, KDDP, Lithiumniobat u. a. m., wobei dann z. B. die Summenfrequenz der von den beiden aktiven Lasermedium (20, 22) erzeugten Grundfrequenzen erzeugt wird. Man kann jedoch auch ein parametrisches Medium verwenden, das die Differenzfrequenz liefert, wie im Hauptpatent näher erläutert ist.

Der gemeinsame zweite Spiegel (14) ist ein trichroischer Spiegel, der die Summen- oder Differenzfrequenz möglichst vollständig, die Grundfrequenzen der beiden aktiven Lasermedien (20, 22) jedoch in geringerem Maße reflektiert. Auf die Arbeitsweise der Anordnung gemäß Fig. 4 wird unten noch näher eingegangen.

Die Anordnung gemäß Fig. 5 enthält wieder einen ersten Laserresonator (10), der durch einen ersten Spiegel (12) und einen zweiten Spiegel (14) begrenzt ist und zwischen dem ersten und zweiten Spiegel (12, 14) der Reihe nach ein aktives Lasermedium (20), eine Strahlvereinigungsvorrichtung (24), einen Auskoppelspiegel (30), ein nichtlineares optisches Medium (26) und eine zur Phaseneinstellung dienende, schwenkbar gelagerte planparallele Platte (28) enthält. Die Anordnung gemäß Fig. 5 unterscheidet sich von der gemäß Fig. 4 jedoch dadurch, daß der zweite Laserresonator vom ersten Laserresonator getrennt ist und zwei eigene Spiegel (42, 44) enthält, die zu einem als Ganzes mit (46) bezeichneten Laser gehören. Der Laser (46) liefert einen Zug (48) aus ultrakurzen Laserstrahlungsimpulsen, der durch die Strahlvereinigungsvorrichtung (24) in den Strahlengang des ersten Laserresonators (10) eingespiegelt wird.

Den aktiven Lasermedien (20 und 22) sowie dem nicht dargestellten Lasermedium des Lasers (46) sind selbstverständlich entsprechende Pumpeinrichtungen (nicht dargestellt) zugeordnet, deren Art vom Typ des jeweiligen Lasermediums abhängt und die in dem betreffenden Lasermedium eine für die Laseremission ausreichende Besetzungsinversion zu erzeugen gestatten. Die optischen Längen der Resonatorhohlräume der beiden modengekoppelten Laser sind gleich. Die richtige Phasenbeziehungen der vom trichroischen Spiegel reflektierten Lichtschwingungen kann wie bei der Anordnung gemäß dem Hauptpatent durch Änderung des Abstandes zwischen dem nichtlinearen Medium und dem trichroischen Spiegel oder durch Änderung des (Luft-) Druckes zwischen diesen beiden Elementen oder durch irgendwelche andere Maßnahmen eingestellt werden.

Im folgenden soll nun auf das Prinzip der Modenkopplung der beiden Laser gemäß Fig. 4, die einen gemeinsamen Laserresonatorteil enthalten, und die Modenkopplung des Lasers (46) mit dem den Resonator (10) enthaltenden Laser gemäß Fig.

5 näher eingegangen werden. Für beide Anordnungen sind die Strahlvereinigungseinrichtung (24), das nichtlineare Medium (26) und der trichroische Spiegel (14) wesentlich.

Unter bestimmten Bedingungen nimmt das Reflexionsvermögen (Reflektivität) für die Lichtschwingungen der beiden Laserstrahlungs-Grundfrequenzen w1 bzw. w2, die von der Seite der Einrichtung (24) her in das nichtlineare Medium (26) eintreten, mit der Intensität dieser Lichtschwingungen zu. Diese Bedingungen sind: Die Reflektivität (Reflexionsvermögen) R3 des trichroischen Spiegels (14) bei der Summen- oder Differenzfrequenz ist nahezu 100 Prozent; die Reflektivitäten R1, R2 des Spiegels (14) bei den Grundfrequenzen w1 bzw. w2 der Lasermedien (20 bzw. 22) sind kleiner als R3, und die drei Lichtschwingungen, die vom trichroischen Spiegel (14) reflektiert werden, haben die richtigen Phasenbeziehungen. Der optimale Wert für die Reflektivitäten R1, R2 des Spiegels (14) (und im Falle von Fig. 1 der Reflektivitäten R1, R2 des Spiegels (18)) bei den Lasergrundfrequenzen w1 und w2 können empirisch ermittelt werden und hängen von Geräteparametern, wie Verstärkung pro Umlauf und Sättigungsintensität, ab. R1 und R1 können z. B. zwischen 0,05 und 95 Prozent liegen, wenn R3 nahe bei 100 Prozent liegt. Allgemein gilt, daß der Wert von R3 größer als einer der Werte von R1 und R2 sein soll.

Eine genauere Untersuchung zeigt, daß die nichtlinearen Reflektivitäten $R1^{NL}$ und $R2^{NL}$ der Kombination aus dem nichtlinearen Medium (26) und dem trichroischen Spiegel (14) bei den beiden Lasergrundfrequenzen w1 und w2 im Falle der Erzeugung der Summenfrequenz w3 = w1 + w2 durch das nichtlineare Medium (26) durch die folgenden Gleichungen gegeben sind:

$$R1^{NL} = A(1-sn^2[\{-\sqrt{\beta B}.sn^{-1}(\sqrt{\eta},\sqrt{\beta}) + sn^{-1}[(\eta R3/A)^{\frac{1}{2}},\sqrt{A/B}]\},\sqrt{A/B}]), \quad (2)$$

$$R2^{NL} = \beta(B-A + R1^{NL}) \quad (3)$$

wobei $\beta$ = n1/n2 das Verhältnis der normierten Photonenzahlen der beiden Eingangs-Grundwellen ist und $\eta$ der Photonen-Konversionswirkungsgrad für die Grundschwingung w1 in die Summenfrequenzstrahlung ist. Es sind also

$$A = (1 - \eta) R1 + R3 \quad (4)$$

$$B = (1/\beta - \eta) R2 + R3. \quad (5)$$

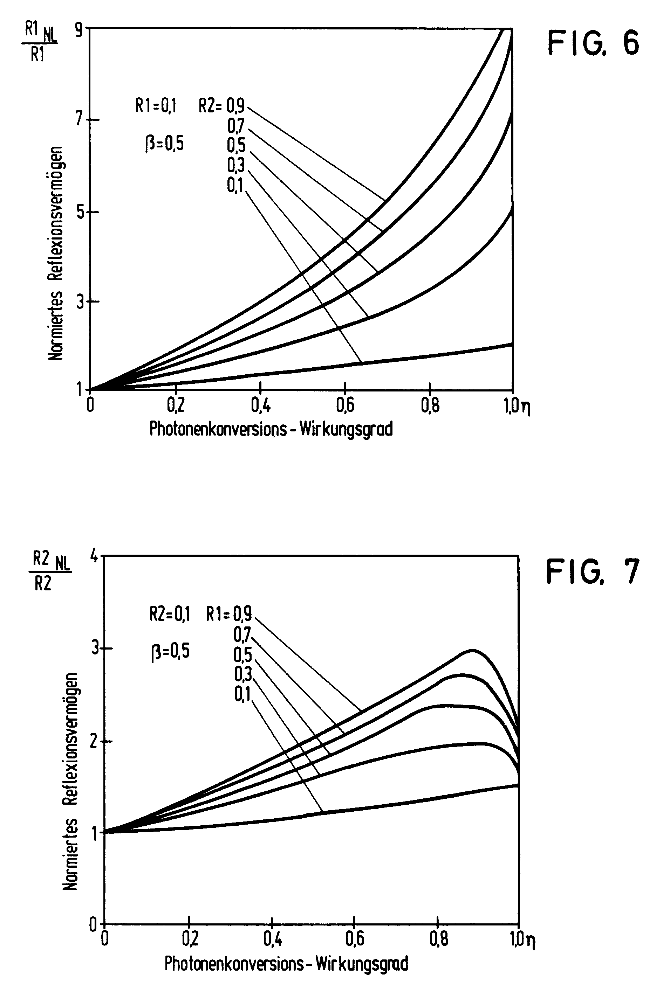

In Gleichung (2) sind sn(u,m) und $sn^{-1}$(u,m) die Jakobi'sche elliptische Funktion bzw. ihre Inverse, und R1, R2 sind die Reflektivitäten des trichroischen Spiegels bei den Grundfrequenzen der beiden Lasermedien (20, 22). In Fig. 6 und 7 ist die Abhängigkeit der nichtlinearen Reflexionskoeffizienten $R1^{NL}$ bzw. $R2^{NL}$ von $\eta$ dargestellt. Da der Konversionswirkungsgrad den Eingangsintensitäten proportional ist, nehmen die Reflektivitäten offensichtlich mit den Lichtintensitäten zu. Wenn eine nichtlineare optische Einrichtung mit solchen Eigenschaften im Inneren eines Laserresonatorhohlraumes angeordnet wird, so führt dies bekanntlich zu einer Pulsamplitudenselektion und Pulsverkürzung, so daß schließlich aus den anfänglichen statistischen Lichtschwankungen ein einzelner ultrakurzer Lichtimpuls resultiert. Die Kombination aus dem nichtlinearen Medium und dem trichroischen Spiegel kann also als nichtlineare optische Einrichtung angesehen werden, welche eine synchrone Modenkopplung der beiden Laser bewirkt, die sich einen Teil der Resonatoren teilen.

Die Verhältnisse sind ganz ähnlich, wenn, wie es bei Fig. 5 der Fall ist, ein Impulszug (48) von außen in den durch die Spiegel (12) und (14) begrenzten Laserresonanzhohlraum eingekoppelt wird. Der eingekoppelte Impulszug moduliert das Reflexionsvermögen für die mittels des aktiven Mediums (20) erzeugte Laserstrahlung, so daß eine synchrone Modenkopplung eintritt.

Die oben beschriebenen Ausführungsbeispiele lassen sich selbstverständlich in der verschiedensten Weise abwandeln. Man kann z. B. die Anordnung so treffen, daß das nichtlineare Medium für eine nichtcolineare Summen- oder Differenzfrequenzerzeugung eingerichtet ist. In diesem Falle kreuzen sich die optischen Achsen oder Strahlengänge der beiden Laserresonatoren, die gleiche Längen haben sollen, in einem Punkt, in dem das nichtlineare Medium angeordnet ist und es ist ein zusätzlicher Spiegel vorgesehen, der die aus dem nichtlinearen Medium austretende Strahlung zurück in das nichtlineare Medium reflektiert. Dieser Spiegel und/oder der zweite Spiegel (14) im Strahlengang zwischen dem ersten und dem zweiten Spiegel haben ein hohes Reflexionsvermögen für die Summen- oder Differenzfrequenz und ein niedrigeres Reflexionsvermögen für die Laserstrahlungsfrequenzen. Die nichtlineare Einrichtung kann auch ein Raman-aktives Medium enthalten. Die Laserfrequenzen w1, w2 müssen dann den Bedingungen

$$w1 - w2 = \Omega \text{ oder } w2 - w1 = \Omega \quad (6)$$

genügen, wobei $\Omega$ die Raman-Frequenzverschiebung des Mediums bedeutet.

**Patentansprüche**

1. Modengekoppelter Laser mit einem aktiven Medium (6) zum Erzeugen einer grundfrequenten Strahlung ($v_1$), ferner mit einem optischen Resonator, der durch einen ersten Spiegel (7) sowie einen zweiten Spiegel (5) begrenzt ist und das aktive Medium (6) enthält, und mit einer zwischen dem aktiven Medium (6) und dem zweiten Spiegel (5) angeordneten, zur passiven Modenkopplung dienenden nichtlinearen optischen Einrichtung (1), welche eine bevorzugte Verstärkung von Strahlung höherer Intensität gegenüber Strahlung niedrigerer Intensität bewirkt, **dadurch gekennzeichnet,** daß die nichtlineare optische Einrichtung (1) eine reversibel arbeitende frequenzumsetzende Einrichtung ist, welche bei Beaufschlagung mit der grundfrequenten Strahlung ($\upsilon_1$) Strahlung einer ersten Frequenz, die die Grundfrequenz ($v_1$) sein kann, und Strahlung einer zweiten Frequenz ($v_2$) liefert und umgekehrt, wobei mit zunehmender Intensität der Anteil der Strahlung der zweiten Frequenz ($v_2$) wächst, und daß der zweite Spiegel (5) bei der Grundfrequenz ($v_1$) ein niedrigeres Reflexionsvermögen hat als bei der zweiten Frequenz.

2. Modengekoppelter Laser mit einem aktiven Medium (20) zum Erzeugen einer grundfrequenten Laserstrahlung (w1), ferner mit einem optischen Resonator, der durch einen ersten Spiegel (12) sowie einen zweiten Spiegel (14) begrenzt ist und das aktive Medium (20) enthält, und mit einer zwischen dem aktiven Medium (20) und dem zweiten Spiegel (14) angeordneten, zur passiven Modenkopplung dienenden nichtlinearen optischen Einrichtung (26), welche eine bevorzugte Verstärkung von Strahlung höherer Intensität gegenüber Strahlung niedrigerer Intensität bewirkt, **dadurch gekennzeichnet,** daß die nichtlineare optische Einrichtung (26) eine reversibel arbeitende frequenzumsetzende Einrichtung ist, und daß eine Einrichtung (24) zum Einkoppeln von Laserstrahlung einer weiteren Frequenz (w2) in die nichtlineare Einrichtung (26) sowie eine Reflektoranordnung (14), welche im Wege von Strahlung, die aus der nichtlinearen Einrichtung (26) austritt, angeordnet ist und für die grundfrequente Strahlung (w1) und die Strahlung der weiteren Frequenz (w2) ein niedrigeres Reflexionsvermögen hat als für Strahlung einer zweiten Frequenz (w1+w2; w1-w2), die durch Wechselwirkung der beiden Laserstrahlungen in der nichtlinearen Einrichtung (26) entsteht, vorgesehen sind.

3. Laser nach Anspruch 2, **dadurch gekennzeichnet,** daß die Einkoppeleinrichtung (24) eine Strahlvereinigungseinrichtung ist, die zwischen dem aktiven Medium (20) und der nichtlinearen optischen Einrichtung (26) in einem ersten Strahlengang zwischen dem ersten und dem zweiten Spiegel (12, 14) und außerdem in einem zweiten Strahlengang für die zweite Laserstrahlung (w2) angeordnet ist und letztere in den die nichtlineare Einrichtung (26) enthaltenden Teil des ersten Strahlenganges umlenkt und daß die Reflektoranordnung aus dem zweiten Spiegel (14) besteht.

4. Laser nach Anspruch 3, **dadurch gekennzeichnet,** daß der zweite Strahlengang ein zweites aktives Lasermedium (22) enthält und daß der Zweite Strahlengang auf der der Strahlvereinigungseinrichtung (24) abgewandten Seite des Zweiten Lasermediums (22) durch einen dritten Spiegel (18) begrenzt ist.

5. Laser nach Anspruch 3, **dadurch gekennzeichnet,** daß der zweite Strahlengang einen weiteren Laser (46) enthält.

6. Laser nach Anspruch 2, **dadurch gekennzeichnet,** daß die Laserstrahlung der weiteren Frequenz in einem Strahlengang verläuft, der den Strahlengang zwischen dem ersten und zweiten Spiegel (12, 14) in der nichtlinearen Einrichtung kreuzt und durch einen weiteren Spiegel begrenzt ist und daß die Reflektoranordnung durch den zweiten und/oder den weiteren Spiegel gebildet wird.

7. Laser nach einem der Ansprüche 2 bis 6, **dadurch gekennzeichnet,** daß die nichtlineare Einrichtung einen Kristall zur Erzeugung der Summen- oder Differenzfrequenz der beiden Laserstrahlungen enthält.

8. Laser nach einem der Ansprüche 2 bis 6, **dadurch gekennzeichnet,** daß die nichtlineare Einrichtung ein Ramann-aktives Medium enthält und daß die beiden Laserfrequenzen die Bedingung

$$w1-w2 = \Omega \quad \text{oder} \quad w2-w1 = \Omega$$

erfüllen, wobei w1, w2 die Frequenzen der ersten bzw. zweiten Laserstrahlung bedeuten und $\Omega$ die Raman-Verschiebung des nichtlinearen Mediums ist.

9. Laser nach einem der Ansprüche 1 bis 6, **dadurch gekennzeichnet,** daß die nichtlineare Einrichtung eine parametrische Einrichtung enthält.

10. Laser nach einem der Anspruch 1 bis 6, **dadurch gekennzeichnet,** daß die nichtlineare optische Einrichtung (1) so ausgebildet ist, daß die erste Frequenz die Grundfrequenz und die zweite Frequenz die dreifache Grundfrequenz des Lasers sind.

11. Laser nach einem der Ansprüche 1 bis 10, **gekennzeichnet durch** eine Einrichtung (4) zum Einstellen der Phasenlage der vom zweiten Spiegel (5) reflektierten Strahlung.

12. Laser nach Anspruch 11, **dadurch gekennzeichnet,** daß die Einrichtung (4) zur Einstellung der Phasenlage eine zwischen der nichtlinearen optischen Einrichtung (1) und dem zweiten Spiegel (5) schwenkbar angeordnete planparallele Glasplatte enthält.

13. Laser nach einem der Ansprüche 1 bis 12, **gekennzeichnet durch** eine vom zweiten Spiegel (5) getrennte Einrichtung (8) zum Auskoppeln der Strahlung der zweiten Frequenz aus dem optischen Resonator.

14. Laser nach Anspruch 13, **dadurch gekennzeichnet,** daß die Einrichtung (8) zum Auskoppeln der Strahlung der zweiten Frequenz einen dichroitischen Spiegel enthält, der die Strahlung der zweiten Frequenz stärker reflektiert als die Strahlung der ersten Frequenz.

## Claims

1. Mode-locked laser with an active medium (6) for generation of a basic frequency radiation ($v_1$), also comprising an optical resonator, which is bounded by a first mirror (7) and a second mirror (5) and contains said active medium (6), and a non-linear optical instrument (1), which is arranged between said active medium (6) and said second mirror (5) for locking in passive mode and which effects a preferred intensification of higher-intensity radiation in relation to lower-intensity radiation, characterised in that said non-linear optical instrument (1) is a reversible frequency converter, which, when exposed to the basic frequency radiation ($v_1$), provides the radiation of a first frequency, which may be the basic frequency ($v_1$), and radiation of a second frequency ($v_2$) and vice versa, wherein the proportion of the radiation of the second frequency ($v_2$) increases as the intensity increases, and that said second mirror (5) has a lower reflectivity at the basic frequency ($v_1$) than at the second frequency.

2. Mode-locked laser with an active medium (20) for generation of a basic frequency radiation (w1), also comprising an optical resonator, which is bounded by a first mirror (12) and a second mirror (14) and contains said active medium (20), and a non-linear optical instrument (26), which is arranged between said active medium (20) and said second mirror (14) for locking in passive mode and which effects a preferred intensification of higher-intensity radiation in relation to lower-intensity radiation, characterised in that said non-linear optical instrument (26) is a reversible frequency converter, and that a device (24) is provided for coupling laser radiation of a further frequency (w2) into said non-linear instrument (26) as well as a reflector arrangement (14), which is arranged in the path of radiation issuing from said non-linear instrument (26) and which has a lower reflectivity for the basic frequency radiation (w1) and the radiation of the further frequency (w2) than for the radiation of a second frequency (w1 + w2; w1-w2) occurring in said non-linear instrument (26) as a result of the two laser radiations interacting.

3. Laser according to Claim 2, characterised in that the coupling device (24) is a beam recombiner, which is arranged between the active medium (20) and the non-linear optical instrument (26) in a first optical path between the first and the second mirror (12, 14), and is also arranged in a second optical path for the second laser radiation (w2), and deflects the latter into the portion of the first optical path containing said non-linear instrument (26), and that the reflector arrangement comprises the second mirror (14).

4. Laser according to Claim 3, characterised in that the second optical path contains a second active laser medium (22), and that said second optical path is bounded by a third mirror (18) on the side of the second laser medium (22) which is averted from the beam recombiner (24).

5. Laser according to Claim 3, characterised in that the second optical path contains a further laser (46).

6. Laser according to Claim 2, characterised in that the laser radiation of the further frequency runs in an optical path, which crosses the optical path between the first and second mirror (12, 14) in the non-linear instrument and is bounded by a further mirror, and that the reflector arrangement is formed by said second and/or said further mirror.

7. Laser according to one of Claims 2 to 6, characterised in that the non-linear instrument contains a crystal for generation of the aggregate or difference frequency of the two laser radiations.

8. Laser according to one of Claims 2 to 6, characterised in that the non-linear instrument contains a Raman-active medium, and that the two laser frequencies meet the requirement

w1-w2 = Ω or w2-w1 = Ω,

wherein w1, w2 are the frequencies of the first and second laser radiations respectively and Ω is the Raman displacement of the non-linear medium.

9. Laser according to one of Claims 1 to 6, characterised in that the non-linear instrument contains a parametric device.

10. Laser according to one of Claims 1 to 6, characterised in that the non-linear optical instrument (1) is constructed so that the first frequency is the basic frequency and the second frequency is the triple basic frequency of said laser.

11. Laser according to one of Claims 1 to 10, characterised by a device (4) for adjusting the phase position of the radiation reflected by the second mirror (5).

12. Laser according to Claim 11, characterised in that the device (4) for adjusting phase position includes a pivoting, plane-parallel glass plate arranged between the non-linear optical instrument (1) and the second mirror (5).

13. Laser according to one of Claims 1 to 12, characterised by a device (8) separate from the second mirror (5) for decoupling the radiation of the second frequency from the optical resonator.

14. Laser according to Claim 13, characterised in that the device (8) for decoupling the radiation of the second frequency includes a dichroic mirror, which reflects the radiation of the second frequency more strongly than the radiation of the first frequency.

**Revendications**

1. Laser à accrochage de mode comportant un milieu actif (6) pour réaliser un rayonnement ($v_1$) à fréquence de base, comportant, de plus, un résonateur optique délimité par un premier miroir (7) et un deuxième miroir (5) et contenant le milieu actif (6), et comportant un dispositif optique (1) non linéaire, servant au couplage passif de mode, disposé entre le milieu actif (6) et le deuxième miroir (5), et produisant un renforcement préféré du rayonnement d'une intensité plus élevée par rapport à un rayonnement d'intensité plus faible, caractérisé en ce que le dispositif optique (1) non linéaire est un dispositif modifiant la fréquence, travaillant de façon réversible, qui, lorsqu'il est soumis au rayonnement à la fréquence de base ($v_1$), fournit un rayonnement d'une première fréquence, qui peut être la fréquence de base ($v_1$), et un rayonnement d'une autre fréquence ($v_2$), et inversement, étant entendu qu'avec une intensité croissante, la proportion du rayonnement de la deuxième fréquence ($v_2$) croît, et en ce que le deuxième miroir (5) a, avec la fréquence de base ($v_1$), un pouvoir réfléchissant plus faible qu'avec la deuxième fréquence.

2. Laser à accrochage de mode comportant un milieu actif (20) pour réaliser un rayonnement ($w_1$) à fréquence de base, comportant, de plus, un résonateur optique délimité par un premier miroir (12) et un deuxième miroir (14) et contenant le milieu actif (20), et comportant un dispositif optique (26) non linéaire, servant au couplage passif de mode, disposé entre le milieu actif (20) et le deuxième miroir (14), et produisant un renforcement préféré du rayonnement d'une intensité plus élevée par rapport à un rayonnement d'intensité plus faible, caractérisé en ce que le dispositif optique (26) non linéaire est un dispositif modifiant la fréquence, travaillant de façon réversible, et en ce qu'il est prévu un dispositif (24) pour accrocher le rayonnement laser d'une autre fréquen-ce ($w_2$) dans le dispositif non linéaire (26), ainsi qu'un dispositif réfléchissant (14), qui est disposé sur le trajet du rayonnement sortant du dispositif non linéaire (26) et qui présente, pour le rayonnement ($w_1$) à fréquence de base et pour le rayonnement de l'autre fréquence ($w_2$), un pouvoir réfléchissant plus bas que pour le rayonnement d'une deuxième fréquen-ce ($w_1 + w_2$; $w_1 - w_2$), résultant de l'interac-tion des deux rayonnements laser dans le dispositif non linéaire (26).

3. Laser suivant la revendication 2, caractérisé en ce que le dispositif d'accrochage (24) est un dispositif de recombinaison du rayonnement, qui est disposé entre le milieu actif (20) et le dispositif optique (26) non linéaire dans un premier trajet du rayonnement entre le premier et le deuxième miroir (12, 14) et, d'autre part, dans un deuxième trajet du rayonnement pour le deuxième rayonnement laser ($w_2$), et en ce que ce dernier est dévié vers la partie du premier trajet du rayonnement contenant le dispositif non linéaire (26), et en ce que le dispositif réfléchissant est constitué du deuxième miroir (14).

4. Laser suivant la revendication 3, caractérisé en ce que le deuxième trajet du rayonnement contient un deuxième milieu laser actif (22) et en ce que le deuxième trajet du rayonnement, sur le côté du deuxième milieu laser (22), opposé au dispositif d'accrochage (24) du rayonnement, est limité par un troisième miroir (18).

5. Laser suivant la revendication 3, caractérisé en ce que le deuxième trajet du rayonnement contient un autre laser (46).

6. Laser suivant la revendication 2, caractérisé en ce que le rayonnement laser de l'autre fréquence passe suivant un trajet de rayonnement qui croise le trajet de rayon entre le premier et le deuxième miroir (12, 14) dans le dispositif non linéaire, et qui est limité par un autre miroir, et en ce que le dispositif réfléchissant est formé par le deuxième et/ou l'autre miroir.

7. Laser suivant l'une quelconque des revendications 2 à 6, caractérisé en ce que le dispositif non linéaire contient un cristal pour faire la somme ou la différence des fréquences des deux rayonnements laser.

8. Laser suivant l'une quelconque des revendications 2 à 6, caractérisé en ce que le dispositif non linéaire contient un milieu actif Raman et en ce que les deux fréquences laser remplissent la condition

$$w_1 - w_2 = \Omega \text{ ou } w_2 - w_1 = \Omega$$

$w_1$ et $w_2$ représentant respectivement les fréquences du premier et du deuxième rayonnement laser et $\Omega$ le décalage Raman du milieu non linéaire.

9. Laser suivant l'une quelconque des revendications 1 à 6, caractérisé en ce que le dispositif non linéaire contient un dispositif paramétré.

10. Laser suivant l'une quelconque des revendications 1 à 6, caractérisé en ce que le dispositif optique (1) non linéaire est réalisé de telle façon que la première fréquence soit la fréquence de base et que la deuxième fréquence soit le triple de la fréquence de base du laser.

11. Laser suivant l'une quelconque des revendications 1 à 10, caractérisé par un dispositif (4) pour régler la position de phase du rayonnement réfléchi par le deuxième miroir (5).

12. Laser suivant la revendication 11, caractérisé en ce que le dispositif (4) pour régler la position de phase contient une plaque de verre à plans parallèles, disposée de façon à pouvoir pivoter entre le dispositif optique (1) non linéaire et le deuxième miroir (5).

13. Laser suivant l'une quelconque des revendications 1 à 12, caractérisé par un dispositif (8), séparé du deuxième miroir (5), pour découpler, du résonateur optique, le rayonnement de la deuxième fréquence.

14. Laser suivant la revendication 13, caractérisé en ce que le dispositif (8) pour découpler le rayonnement de la deuxième fréquence contient un miroir dichroïde, qui réfléchit plus fortement le rayonnement de la deuxième fréquence que le rayonnement de la première fréquence.

FIG. 1

# FIG. 2

# FIG. 3

FIG. 4

FIG. 5

FIG. 6

$\dfrac{R1_{NL}}{R1}$

Normiertes Reflexionsvermögen

R1=0,1
β=0,5

R2= 0,9
0,7
0,5
0,3
0,1

Photonenkonversions - Wirkungsgrad

η

FIG. 7

$\dfrac{R2_{NL}}{R2}$

Normiertes Reflexionsvermögen

R2=0,1
β=0,5

R1= 0,9
0,7
0,5
0,3
0,1

Photonenkonversions - Wirkungsgrad

η